(19) Europäisches Patentamt
European Patent Office
Office européen des brevets

(11) **EP 1 630 143 B1**

(12) **EUROPEAN PATENT SPECIFICATION**

(45) Date of publication and mention of the grant of the patent:
**20.11.2019 Bulletin 2019/47**

(21) Application number: **04745937.5**

(22) Date of filing: **09.06.2004**

(51) Int Cl.:
*C04B 5/06* (2006.01)   *C21B 3/04* (2006.01)

(86) International application number:
**PCT/JP2004/008385**

(87) International publication number:
**WO 2004/108624 (16.12.2004 Gazette 2004/51)**

(54) **METHOD OF TREATMENT OF STEELMAKING-SLAG FOR STABILIZATION, STABILIZED STEELMAKING-SLAG, USE THEROF AS ENVIRONMENT PROTECTION MATERIAL AND WATER ENVIRONMENT PROTECTION METHOD USING SAID SLAG**

VERFAHREN ZUR STABILISIERUNGSBEHANDLUNG VON SCHLACKEN AUS DER STAHLPRODUKTION, STABILISIERTE SCHLACKE AUS DER STAHLPRODUKTION, VERWENDUNG DAVON ALS UMWELTSCHUTZMATERIAL UND VERFAHREN ZUR ÖKOLOGISCHEN KONSERVIERUNG EINES WASSERGEBIETS UNTER VERWENDUNG DER SCHLACKE

PROCEDE DE TRAITEMENT DE STABILISATION POUR LAITIER SIDERURGIQUE, LAITIER SIDERURGIQUE STABILISE, SON UTILISATION COMME MATERIAU DE PROTECTION DE L'ENVIRONNEMENT ET PROCEDE DESTINE A LA PROTECTION DE L'ENVIRONNEMENT DANS UN PLAN D'EAU AU MOYEN DUDIT LAITIER

(84) Designated Contracting States:
FR

(30) Priority: 09.06.2003 JP 2003163970
14.07.2003 JP 2003196492
20.08.2003 JP 2003208071
26.02.2004 JP 2004052218
11.03.2004 JP 2004069215
09.04.2004 JP 2004115566

(43) Date of publication of application:
**01.03.2006 Bulletin 2006/09**

(73) Proprietor: **Nippon Steel Corporation Tokyo (JP)**

(72) Inventors:
• **Tsutsumi, Naoto,**
c/o Nippon Steel Corp.
**Futtsu-shi,**
**Chiba 2938511 (JP)**
• **Mukawa, Susumu,**
c/o Nippon Steel Corp.
**Tokai-shi, Aichi 4768686 (JP)**
• **Tanaka, Makoto,**
c/o Nippon Steel Corp.
**Tokai-shi, Aichi 4768686 (JP)**
• **Aoki, Toshikazu,**
c/o Nippon Steel Corp.
**Himeji-shi, Hyogo 6711188 (JP)**
• **Sado, Tatsuya,**
c/o Nippon Steel Corp.
**Tokai-shi, Aichi 4768686 (JP)**
• **Tasaki, Tomoaki,**
c/o Nippon Steel Corp.
**Tokai-shi, Aichi 4768686 (JP)**
• **Yokoo, Masayoshi,**
c/o Nippon Steel Corp.
**Kitakyushu-shi, Fukuoka 8048501 (JP)**
• **Kiso, Eiji,**
c/o Nippon Steel Corp
**Futtsu-shi,**
**Chiba 2938511 (JP)**
• **Nakagawa, Masao,**
c/o Nippon Steel Corp
**Futtsu-shi,**
**Chiba 2938511 (JP)**

(74) Representative: **Vossius & Partner**
**Patentanwälte Rechtsanwälte mbB**
**Siebertstrasse 3**
**81675 München (DE)**

(56) References cited:
FR-A1- 2 735 767      JP-A- 8 259 282
JP-A- 2000 203 903      US-A- 5 569 314

- **JOHNSON D C ET AL: "Solidification of stainless steel slag by accelerated carbonation", ENVIRONMENTAL TECHNOLOGY, SELPER LTD, GB, vol. 24, no. 6, 1 June 2003 (2003-06-01), pages 671-678, XP008099611, ISSN: 0959-3330**
- **KONDO R ET AL: "New Material obtained by Carbonation of L.D. Slag", SEKKO TO SEKKAI - GYPSUM AND LIME, SEKKO SEKKAI KENKYUKAI, TOKYO, JP, vol. 4, no. 147, 1 January 1977 (1977-01-01), pages 3(61)-7(67), XP008091956, ISSN: 0559-331X**

Remarks:
The file contains technical information submitted after the application was filed and not included in this specification

**Description**

TECHNICAL FIELD

The present invention relates to a method of treatment of steelmaking-slag produced in a steelmaking plant etc., in particular converter-slag, pretreatment-slag, secondary refining-slag, or other steelmaking-slag, for stabilization, stabilized steelmaking-slag, and a water environment protection material and water environment protection method using that slag.

BACKGROUND ART

As applications for the steelmaking-slag produced in steelmaking plants etc., in addition to road construction materials, aggregate, stone, and other materials for civil engineering use, in recent years water environment protection materials for the ocean, rivers, lakes and marshes, tidal flats, etc. have been studied.

The above steelmaking-slag, in particular the steelmaking-slag produced from refining furnaces such as converters, pretreatment furnaces, and secondary refining furnaces (in the case of refining in torpedo cars, the torpedo cars), has hydrating ingredients (free-CaO or free-MgO) such as CaO ingredients not completely melting during the refining treatment, that is, not yet consumed.

If these ingredients contact moisture, (i) they increase in volume about two-fold at the time of hydration and cause the slag to expand, (ii) the hydrating ingredients (free-CaO) dissolve into the water to cause the pH to rise, and (iii) the hydrating ingredients dissolve into the seawater to cause the pH to rise, the $Mg^{2-}$ in the seawater reacts with the $OH^-$ supplied from the steelmaking-slag, and $Mg(OH)_2$ is precipitated to cause the seawater to become turbid.

These problems become inhibitory factors when utilizing steelmaking-slag as road construction materials, aggregate, stone materials, and other materials for civil engineering use.

Further, when using steelmaking-slag as a water environment protection material, it is preferably treated so that the above problems do not occur.

Among the problems, for the expansion phenomenon of (i), as methods of treatment for reducing the causative free-CaO or free-MgO to stabilize the expandability of the slag, "atmospheric aging" treatment exposing the slag in the air atmosphere for several months to several years to cause a sufficient hydration reaction or "water vapor aging" or "pressurized aging" forcibly causing the slag to react with water vapor under atmospheric pressure or under pressure to promote the hydration reaction are widely known.

However, for the alkali dissolution phenomena of the rise in pH or turbidity of (ii) and (iii), even if applying the above aging treatment, not only the residual free-CaO, but also the product of the hydration treatment after aging, that is, $Ca(OH)_2$, will remain unchanged as soluble sources of alkali dissolution, so the problems are not solved.

Accordingly, as one method for making the soluble lime ingredients insoluble to stabilize the steelmaking-slag, treatment for carbonation has been studied for a long time.

Technology for carbonation of steelmaking-slag is for example disclosed in Japanese Unexamined Patent Publication (Kokai) No. 52-129672, Japanese Unexamined Patent Publication (Kokai) No. 8-259282, etc.

Japanese Unexamined Patent Publication (Kokai) No. 52-129672 discloses technology for granulating and solidifying slag, then holding it at a temperature region of 800 to 300°C under a $CO_2$ atmosphere to carbonate the free-CaO to $CaCO_3$ and stabilize the expansion.

Further, Japanese Unexamined Patent Publication (Kokai) No. 8-259282 discloses technology for aging clumps of steelmaking-slag having a grain size of up to 40 mm first under atmospheric pressure in a water vapor atmosphere to stabilize the expandability, then holding them in a mixed atmosphere of water vapor and $CO_2$ gas for at least 1 hour so cause carbonation.

Further, technology for carbonating steelmaking-slag to produce a material for civil engineering use is for example disclosed in Japanese Unexamined Patent Publication (Kokai) No. 11-21153 or Japanese Unexamined Patent Publication (Kokai) No. 11-71160.

Japanese Unexamined Patent Publication (Kokai) No. 11-21153 discloses a road construction material mainly comprising fine granulated or coarse granulated slag obtained by causing slag to bind and form clumps by the $CaCO_3$ or $CaCO_3$ and $MgCO_3$ produced by a carbonation reaction as a binder.

The method of production of this road construction material comprises forming a pile of fine granulated or coarse granulated slag or a filled layer in any space and causing a carbonation reaction of the same in the presence of $CO_2$ gas so as to cause it to bind and form the slag into clumps. This stone material is then crushed to the predetermined grain size for a road construction material.

Further, Japanese Unexamined Patent Publication (Kokai) No. 11-71160 discloses a stone material designed mainly for use immersed in seawater comprised mainly of slag produced by a ferrous metal production process and additive materials added in accordance with need wherein the slag comprises at least one of fine granulated slag, coarse granulated slag, and small clumps of slag and the slag is caused to bind to form clumps using the $CaCO_3$ or the $CaCO_3$ and $MgCO_3$ produced in a carbonation reaction as a binder.

This method of production of a stone material comprises piling up or filling the above main ingredients to a desired density and causing a carbonation reaction at the pile or filled layer in the presence of $CO_2$ gas so as to cause the fine granulated or coarse granulated slag to bind and form the slag into clumps.

Further, CAMP-ISIJ, vol. 12 [lecture abstracts issued by The Iron and Steel Institute of Japan], p-828 (1999) describes an example of actual fabrication of a large block of 1 m square size using the method disclosed in Japanese Unexamined Patent Publication (Kokai) No. 11-71160.

Further, Japanese Unexamined Patent Publication (Kokai) No. 2001-26470 discloses technology for covering the surface of slag by the $CaCO_3$ or $MgCO_3$ produced by the carbonation treatment of the Ca ingredient or Mg ingredient contained in slag and suppressing the dissolution of the ingredients from the slag by the film covering the slag surface.

However, when treating slag for carbonation in accordance with the conventional method of production, there is the problem that the inherent usability of the slag as a water environment protection material drops due to the hardened film comprising the $CaCO_3$ or other carbonate formed on the slag surface.

That is, when treating soluble ingredients by carbonation to form a hardened film on the slag surface, as described in Japanese Unexamined Patent Publication (Kokai) No. 2001-26470, the dissolution of the ingredients from the slag is suppressed and as a result the rise in pH of the surrounding water or the turbidity due to the precipitation of $Mg(OH)_2$ is suppressed.

However, the hardened film formed on the slag surface causes a drop in the permeability of water through the slag, so the dissolution of minerals from the slag is also inhibited. Further, the ability of the slag to immobilize hydrogen sulfide or phosphorus is also suppressed.

JOHNSON D.C. et al: "Solidification of stainless steel slag by accelerated carbonation", Environmental Technology, vol. 24, no. 6, 1 June 2003, pages 671-678 discloses a reaction of stainless steel slag with carbon dioxide to form a material with strength that is of potential use.

Kondo R. et al: "New Material Obtained by Carbonation of L.D.Slag", SEKKO TO SEKKAI-GYPSUM AND LIME, vol. 4, no. 147, 1 January 1977, pages 3(61)-7(67) discloses a material with strength obtained by carbonation of L.D. Slag.

US5569314 A discloses a thermally stable steel making slag.

JP2000203903 A discloses artificial stone material obtained by slag.

## SUMMARY OF THE INVENTION

The above prior art have the following problems.

In the method disclosed in Japanese Unexamined Patent Publication (Kokai) No. 52-129672, the slag obtained after granulation and high temperature carbonation treatment has a grain size of 0.1 to 10.3 mm, so for example obtaining a slag of the grain size of not more than 40 mm required for a road construction material is difficult.

Further, the free-CaO and the free-MgO in the steelmaking-slag are not only at the surface of the slag grains, but are also contained inside them, i.e., are present in various ways, so even if clumps of slag of 40 mm are obtained, an extremely long time is required for carbonation to the inside of the grains and the process has to be performed under a high temperature atmosphere of at least 300°C, so the cost is high.

Further, the method disclosed in Japanese Unexamined Patent Publication (Kokai) No. 8-259282 comprises treating clumps of steelmaking-slag of a grain size of not more than 40 mm required for road construction materials by water vapor aging, then holding them in a mixed atmosphere of water vapor and $CO_2$ gas for at least 1 hour. While this treatment enables improvement of the expandability of the slag, it is not certain how much of the free-CaO or free-MgO in the slag after the stabilization treatment is carbonated.

That is, in the same way as the above method, only the free-CaO or free-MgO of the slag surface is carbonated and free-CaO or $Ca(OH)_2$ remains at the inside, so if cracked etc. at the time of rolling by a roller etc. when laid as a road construction material on a road surface, the $Ca(OH)_2$ at the inside becomes exposed and the alkali dissolves out.

Further, as a reason for mixture of water vapor and $CO_2$ gas, the difficulty in promotion of carbonation when the ambient temperature becomes less than 80°C may be mentioned, but a commensurate cost is required for maintaining the slag as a whole at a temperature of over 80°C.

On the other hand, the method disclosed in Japanese Unexamined Patent Publication (Kokai) No. 11-21153 supplies a flow of $CO_2$ gas to the fine granulated and/or coarse granulated slag of less than 17 mm size and binds the slag to form clumps using the $CaCO_3$ or the $CaCO_3$ and $MgCO_3$ produced in the carbonation reaction.

This method is an epochal method where even the inside of the slag is carbonated due to the small grain size of the slag and where almost no free-CaO or $Ca(OH)_2$ remains inside the slag, but according to an example, it is necessary to supply a flow of gas containing $CO_2$ gas through slag piled up to a $7 \times 10 \times 1.5$ m size (about 200 tons) for a long time of as much as 5 days.

Further, in the above method, to obtain the desired road construction material adjusted in grain size, the complicated step is required of cutting out the stone material from the binded slag, crushing it, then grading it.

Similarly, the method disclosed in Japanese Unexamined Patent Publication (Kokai) No. 11-71160 also comprises supplying a flow of $CO_2$ gas like in the above method to slag having a maximum grain size of about 300 mm and a certain distribution of grain size and binding the slag into clumps using the $CaCO_3$ or $CaCO_3$ and $MgCO_3$ produced in the carbonation reaction as a binder to obtain a stone material.

In this method as well, according to an example, it is necessary to continue to supply gas containing $CO_2$ gas to slag piled up to a $4 \times 6 \times 1.5$ m size (about 70 tons) for 3 days.

CAMP-ISIJ, vol. 12 [lecture abstracts issued by The Iron and Steel Institute of Japan], p-828 (1999) describes an example of actual fabrication of a large block of 1 m square size using the method disclosed in Japanese Unexamined Patent Publication (Kokai) No. 11-71160. According to this, the slag is filled into a 1 m square frame, then $CO_2$ gas is blown from the bottom. The slag has to be held there for 12 days to ensure a complete reaction.

To form a large number of such large-sized blocks, compared with the case of forming ordinary concrete blocks, which can be removed from the frames in about 2 days after pouring, a considerably large number of frames have to be secured and gas pipes have to be laid to each frame. The productivity cannot be necessarily said to be high.

Further, as disclosed in Japanese Unexamined Patent Publication (Kokai) No. 2001-26470, if a film made of $CaCO_3$ or $MgCO_3$ or another carbonate is formed at the slag surface, the hardened film formed will end up causing a drop in the inherent effects of the slag such as the dissolution of minerals or the ability to immobilize hydrogen sulfide or phosphorus.

Therefore, an object of the present invention is to provide a material for civil engineering use or a water protection material which stabilizes the steelmaking-slag to prevent expansion, disintegration, and powderization of the slag, a rise in pH or turbidity of the water, or other problems and enable the dissolution of minerals from the inside of the slag to the outside of the slag and which has a high ability to immobilize hydrogen sulfide and phosphorus.

The inventors engaged in experiments at the laboratory level and desktop studies relating to the isolation of the factors having an effect on the speed of carbonation of steelmaking-slag and further engaged in repeated experiments at the actual level on site for the method of treatment of steelmaking-slag for stabilization by carbonation and thereby discovered that the above problems can be solved by the features of the invention stated in the claims;

BRIEF DESCRIPTION OF THE DRAWINGS

FIG. 1 is a graph of the behavior of carbonation in the case of changing the amount of moisture added.

FIG. 2 is a graph of the relationship between the amount of moisture added and the carbonation rate after any time according to the present invention.

FIG. 3 is a graph of the region where free-water is present according to measurement of the flow value.

FIG. 4 is a graph of the relationship between the flow rate of gas containing $CO_2$ gas and the carbonation rate after any time.

FIG. 5 is a graph of the behavior of carbonation in the case of changing the temperature of the gas containing $CO_2$ gas and the surroundings of the slag.

FIG. 6 is a graph of the distribution of grain size of slag with a grain size of not more than 1 mm before and after treatment for stabilization according to the present invention.

FIG. 7 is a view of a cross-section of stabilized steelmaking-slag used in the present invention.

FIG. 8 is a view of a cross-section of steelmaking-slag obtained by a conventional carbonation treatment.

FIG. 9 is a view of the state of placement of a water environment protection material for sand capping, filling in a bottom hole in the water, at an artificial shore, at a tidal flat, in a shallow water area, at a underwater plant bed, at an eelgrass bed, and at a fishing reef.

THE MOST PREFERRED EMBODIMENT

Below, the present invention will be explained in detail.

[1] First, an aspect of the invention relating to the treatment of the steelmaking-slag for stabilization will be explained.

In the development of an efficient treatment method for stabilization which suppresses dissolution of free-CaO or $Ca(OH)_2$ from the steelmaking-slag into water or seawater by carbonation treatment, first the inventors graded sufficiently aged steelmaking-slag by a sieve and examined the contents of the free-CaO and $Ca(OH)_2$ for each grain size.

As a result, they learned that when hydrating free-CaO by aging, the slag expands or disintegrates, so in the end the unreacted amount of free-CaO or the $Ca(OH)_2$ after hydration concentrates relatively greatly at the powder parts of less than 2 mm size.

Therefore, the inventors engaged in a basic study for isolating the effects of the various factors affecting the speed of carbonation treatment using about 1 kg of this powdery steelmaking-slag.

First, the inventors investigated the effect of the amount of moisture added to the steelmaking-slag. The inventors added different amounts of moisture to the steelmaking-slag, then supplied a flow of gas containing $CO_2$ gas (concentration of $CO_2$ gas: 100 vol%, relative humidity 100%) at a fixed rate (5 $Nm^3$/hr·ton slag) and observed the carbonation rate from the change in weight of the slag accompanying the carbonation reaction.

Here, the inventors calculated the carbonation rate by the following equation:

$$\text{Carbonation rate (\%)}$$
$$= \text{increased-weight}/\{\text{original slag weight}$$
$$\times (\%f\text{-CaO}) \times 0.786)\} \times 100$$

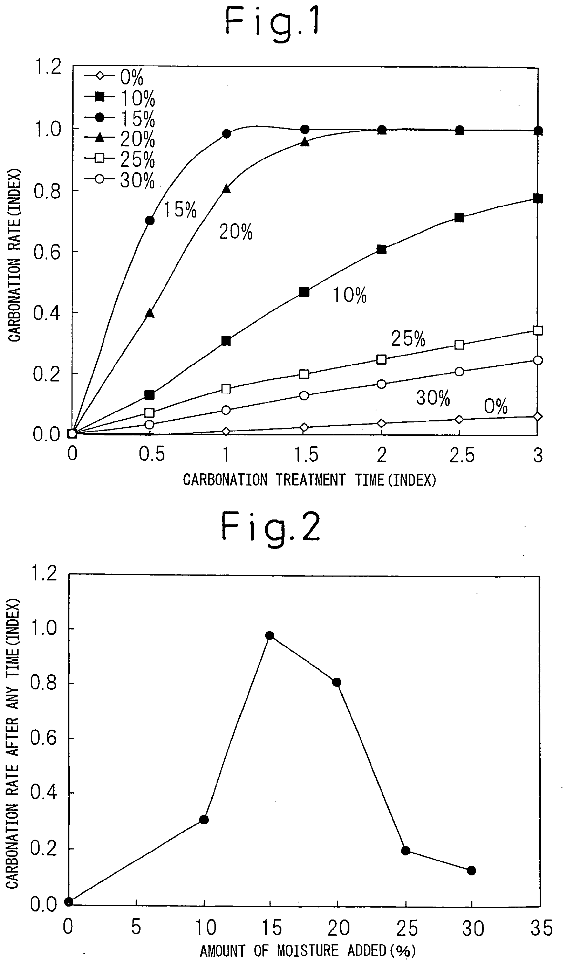

FIG. 1 shows the change along with time of the carbonation rate as seen from the change in weight in the case of changing the moisture added to 0 to 30 mass%.

From the figure, it is confirmed that if not adding moisture, almost change occurs, while if adding moisture, as reported in the past, the carbonation starts smoothly and the speed of carbonation increases along with the increase in added amount of moisture, but if further increasing the amount of moisture added, the speed of carbonation decreases midway.

FIG. 2 is a graph of the carbonation rate after any time with respect to the amount of moisture added based on the results of FIG. 1. From this figure as well, the inventors discovered that there is an amount of moisture added optimal for promotion of carbonation (in the case of this example of slag conditions, 15 mass% or so).

To clarify why there is such an optimal amount of moisture added, the inventors examined slag in the state with moisture added.

As a result, they learned that when the amount of moisture added is less than 10 mass%, there is no moist feeling even if holding the slag in the hand and that if the amount of moisture added is over 25 mass%, the surface of the slag becomes moist and there is clearly water present at the surface.

If adding water to powder, after a little while, the powder absorbs the water. In powder engineering, the water in the state absorbed in powder is called "bound water". When the amount of water added is above a certain level, the powder can no longer absorb all of the water and the water becomes present around the powder.

The water in this state is called "free-water". If this free-water is present, the powder has a paste-like fluidity.

In cement, concrete, and cast irregularly shaped refractories, the fluidity, which is affected by the free-water, becomes important. As an index for obtaining a quantitative grasp of this, the method of measurement of the "flow value" (see JIS R2521:Physical Test Methods of Aluminous Cement for Refractories or JIS R5201:Physical Test Methods of Cement) or the method of measurement of the "slump value" (see JIS A1101:Method of Test for Slump of Concrete) are becoming the standard.

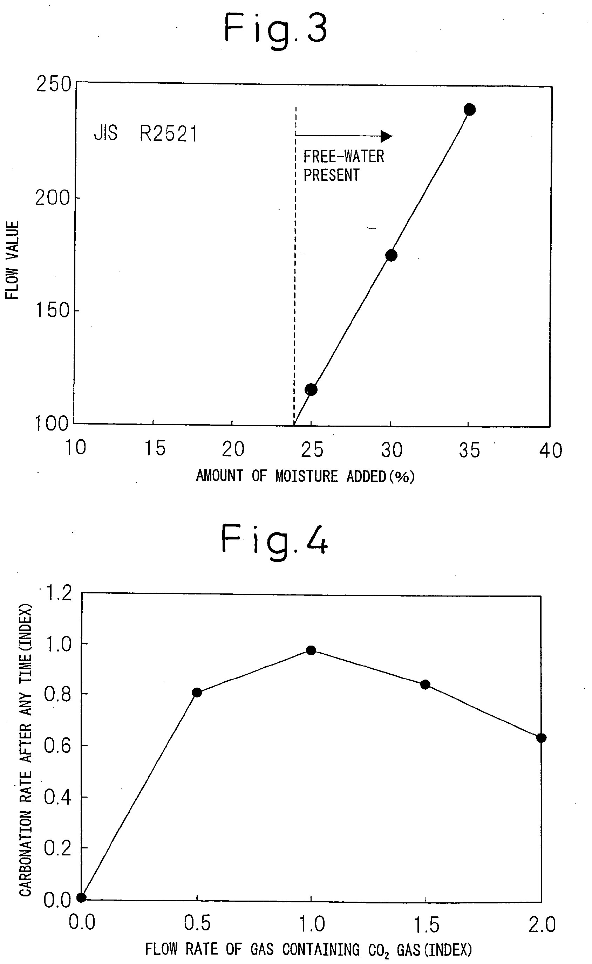

Therefore, the inventors measured the flow value of the case of adding moisture to slag based on this "JIS R2521:Physical Test Methods of Aluminous Cement for Refractories", whereupon, as shown in FIG. 3, if the amount of moisture added is more than 23 mass%, the slag agglomerate exhibits fluidity and a region where free-water is present becomes clear.

That is, it is believed that in the region where the free-water is present, the gas containing $CO_2$ gas has difficulty passing through the slag agglomerate and the speed of carbonation becomes slower.

Japanese Unexamined Patent Publication (Kokai) No. 11-21153 or Japanese Unexamined Patent Publication (Kokai) No. 11-71160 also disclose the importance of moisture and the optimal amounts of moisture, but in these prior art, the grains of the slag are made to bind with each other to form strong clumps by adding different amounts of moisture greater than the water absorption rate (water absorption rate of fine aggregate or coarse aggregate defined by JIS A1109 or A1110). With this, free-water is clearly present and the efficiency of the carbonation treatment drops.

From this consideration, it is believed that the speed of carbonation exhibits its maximal value and efficient carbonation treatment can be performed in the range where moisture is present as bound water to an extent where the surfaces of the voids inside the slag or the outer surface have a moist feeling.

Further, from the current experimental results, the inventors learned that it is effective to adjust the amount of water added to a range less than the moisture value at which free-water starts to become present and at least a value 10 mass% less than that moisture value.

If adjusting the amount of moisture added to obtain more than the moisture value at which free-water starts to become present, the speed of carbonation will drop. Further, even if adjusting the amount of moisture added to a range less than over 10 mass% than the moisture value at which free-water starts to become present, the treatment efficiency falls. Therefore, the inventors defined the amount of moisture added as the above range.

In the claimed treatment method, the amount of moisture added is adjusted to a range 5 to 8 mass% less than the moisture value at which the free-water starts to become present.

The inventors compared the behavior of carbonation for the case of adding carbonated-water and the case of adding ordinary water. They learned that in the case of ordinary water, the carbonation was slow from when the flow of gas containing $CO_2$ gas started to be supplied to when a certain extent of the $CO_2$ gas dissolved in the water, then after a little while, the carbonation began to proceed while in the case of use of carbonated-water, simultaneously with the supply of the flow of gas containing $CO_2$ gas, the carbonation proceeded smoothly and the reaction efficiency was good.

Here, as the carbonated-water added to the steelmaking-slag, at the laboratory level, the inventors used commercially available carbonated-water (soda water, 20°C, amount of $CO_2$ gas dissolved at 1 atmosphere about 3 g/liter-$H_2O$), but for actual use on site, carbonated-water produced by various types of carbonated-water production systems or in some cases water in which $CO_2$ is dissolved obtained by blowing various types of exhaust gas discharged from plants into ordinary water to make the $CO_2$ ingredients in the exhaust gas dissolve in the same may also be used.

In the present invention, as the carbonated-water, it is preferable to use water containing carbonated-water of at least 0.5 time the saturation solubility of $CO_2$ gas at 1 atmosphere at the temperature of the carbonated-water. This is because if the amount of dissolution of the $CO_2$ gas is lower than that, the effect of sufficiently shortening the time of the carbonation reaction is difficult to obtain. However, for a more efficient carbonation reaction, it is preferable that the amount of dissolution of the $CO_2$ gas in the carbonated-water be large (high supersaturation).

Actual steelmaking-slag is not uniform in grain size. Slag of various grain sizes less than about 40 mm aggregates. The distribution of grain size also differs depending on the refining process and cooling process and on the process by which slag is generated such as the process for treating and removing metal.

The amount of moisture which slag can contain differs depending on the distribution of grain size and properties of the slag, so the moisture value at which free-water starts to become present is found in accordance with the distribution of grain size of the individual slag.

If powder or fine granulated-slag is prevalent, the value can be found by the method of measurement of the "flow value" (see JIS R2521:Physical Test Methods of Aluminous Cement for Refractories or JIS R5201:Physical Test Methods of Cement).

Further, if coarse granulated slag of a size of as much as 40 mm or less is contained, the value can be found by the method of measurement of the "slump value" (see JIS A1101:Method for Test for Slump of Concrete).

From the viewpoint of continuously supplying moisture from the gas containing $CO_2$ gas to the slag, the relative humidity of the gas supplied is at least 75%. Based on drying theory, when supplying moisture to partially dried slag, a higher relative humidity is preferable. At least 90% is suitable.

As the gas containing $CO_2$ gas used for the stabilization treatment, on a laboratory basis, the inventors used commercially available $CO_2$ gas or $CO_2$ gas into which air, commercially available nitrogen gas, or commercially available argon gas was mixed, but in actuality, when performing the stabilization treatment on site, for example, it is efficient to use exhaust gas from the various plants in a steelmaking-complex.

As typical exhaust-gases, exhaust-gas of kiln plants burning lime (concentration of $CO_2$ of about 20 vol%), exhaust-gas of heating furnaces (concentration of $CO_2$ or about 7 vol%), exhaust-gas of power generating plants (concentration of $CO_2$ of about 15 vol%), etc. may be mentioned.

If the concentration of the $CO_2$ gas in the gas containing $CO_2$ gas is low, only naturally the speed of carbonation will fall, but it was able to be confirmed from experiments that the lower the concentration of $CO_2$, the higher the efficiency of use for carbonation. Therefore, a low concentration of $CO_2$ gas in the gas containing $CO_2$ gas does not have any special effect other than increasing the time for the carbonation treatment.

The relative humidity of the gas can be easily adjusted by blowing gas containing $CO_2$ gas in advance into a multistage water tank etc. to cause saturation of water vapor or mixing it with mist-like water vapor in a special vessel.

From the above, the aspect of the invention stated in claim 1 prescribes to adjust the amount of moisture or amount of carbonated-water in the steelmaking-slag to a range less than the moisture value at which free-water starts to become present and at least a value 5 to 8 mass% less than the moisture value, then supply a flow of $CO_2$ gas.

Note that the steelmaking-slag is preferably steelmaking-slag treated for aging under an air atmosphere, pressured atmosphere, or water vapor atmosphere (aspect of invention of claim 2).

Next, the inventors investigated the effects of the flow rate and temperature of the gas containing $CO_2$ gas in the state with the optimal amount of water added. FIG. 4 is a graph of the relationship between the flow rate of the gas containing $CO_2$ gas having a concentration of $CO_2$ gas of 100 vol% and a relative humidity of 100% (indexed to 5 $Nm^3$/hr·ton slag as 1) and the carbonation rate after different times.

From this graph, the inventors discovered first that when not supplying a flow of gas (allowing the slag to stand in an atmosphere of a gas containing $CO_2$ gas), the carbonation is extremely slow, that by supplying a flow of gas, the carbonation proceeds, and that the carbonation rate increases along with the increase in flow, but when reaching a certain flow rate or more, the carbonation rate again falls.

To clarify the causes for this, the inventors investigated the behavior of carbonation in the case of a large gas flow rate, whereupon they learned that in fact the larger the gas flow rate, the faster the speed of carbonation at the start, but that the carbonation slows in the middle and that the larger the gas flow rate, the higher the ambient temperature in the surroundings of the slag.

This carbonation reaction is an exothermic reaction. If the carbonation proceeds rapidly at the start, the temperature of the slag rises and the moisture ends up locally evaporating.

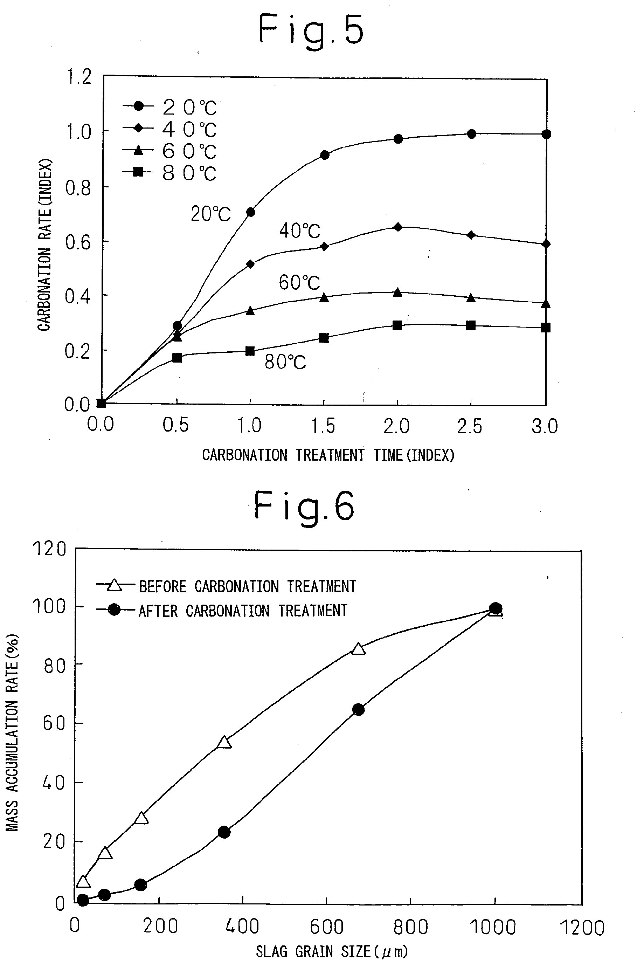

Further, to clarify what kind of effect a higher temperature of the surroundings of the slag has on the carbonation reaction itself, the inventors changed the gas containing the $CO_2$ itself and the temperature of the surroundings of the slag and investigated the carbonation behavior. The results are shown in FIG. 5.

Regarding the temperature at the time of slag treatment, Japanese Unexamined Patent Publication (Kokai) No. 8-259282 describes that when the ambient temperature falls to 80°C or less, the carbonation has trouble proceeding. Further, Japanese Unexamined Patent Publication (Kokai) No. 11-21153 and Japanese Unexamined Patent Publication (Kokai) No. 11-71160 describe that gas of a temperature higher than ordinary temperature is advantageous since the reactivity becomes that much higher.

However, as shown in FIG. 5, even if raising the temperature to ordinary temperature (20°C) or more, the higher the temperature, the slower the speed of carbonation. This fact was discovered by the inventors.

As the causes for this, the following two factors may be considered. First, a carbonation reaction, as explained above, is an exothermic reaction, so a lower temperature is considered advantageous from the thermodynamic viewpoint.

Further, second, there is the effect on the amount of dissolution of $CO_2$ gas in the water included in the slag. The solubility of $CO_2$ gas (ions) in water also in fact becomes greater the lower the temperature and falls exponentially along with the rise in temperature, so the speed of dissolution of the carbonate ions in water, which decrease along with the reaction, is believed to be faster the lower the temperature.

Further, as another factor, drying of the slag by the flow of gas itself is also a concern. Therefore, the inventors tried supplying a flow of water-vapor saturated nitrogen gas instead of gas containing $CO_2$ gas under the same conditions. As a result, again, a drop in the weight of the slag was observed when the gas flow rate was large. The inventors learned that the gas itself robbed the slag of the carbonated-water.

That is, if supplying a flow of gas containing $CO_2$ gas in a large quantity, heat is generated due to the carbonation occurring at the start of the reaction and simultaneously the drying of the slag by the flow of gas itself proceeds, so the moisture ends up being stripped from the slag and the carbonation reaction ends up slowing.

According to the above results of study, the flow rate of the flow of gas containing $CO_2$ gas is preferably controlled so that the carbonation does not proceed too fast, the rise in temperature in the surroundings of the slag is small, drying of the slag due to the gas itself is prevented, and conversely moisture is supplied to the slag from gas containing water vapor.

If based on drying theory, there is the discovery that if a gas flow rate around the powder of at least 20 cm/sec is secured, stable drying is possible. In the present invention, however, the gas flow rate around the slag grains is preferably controlled to not more than 20 cm/sec or, from the viewpoint of the supply of the moisture from the gas, not more than 10 cm/sec.

However, in practice, due to the pressure loss accompanying the packed state of the slag or the irregularity of the flow of gas, control of the gas flow rate is extremely difficult. Therefore, it is practical to measure the temperature of the surroundings of the slag during the stabilization treatment and control the flow rate of the gas so that the temperature becomes at least ordinary temperature and not more than 80°C and, from the viewpoint of the solubility of the $CO_2$ gas in the carbonated-water, preferably not more than 40°C.

Here, "ordinary temperature" differs depending on the region and throughout the four seasons, but normally it is about 25°C or so and in cold regions is at least 10°C below zero and in hot regions up to 40°C.

From the results of the above study, the aspect of the invention stated in claim 1 prescribes adjusting the amount of addition of moisture, then supplying a flow of gas including $CO_2$ gas for carbonation treatment at which time making the relative humidity of the gas 75 to 100% and making the ambient temperature in the surroundings of steelmaking-slag at least 10°C below zero and not more than 40°C by controlling one or two or more of the amount of addition of moisture, the flow rate of the gas, and the relative humidity of the gas.

The ambient temperature of the surroundings of the steelmaking-slag can be measured by a thermocouple or a commercially available temperature sensor etc. It is preferable to perform control so as to increase the flow rate of the gas containing $CO_2$ gas when the temperature in the surroundings of the steelmaking-slag becomes less than ordinary temperature and so as to reduce the flow rate of the gas containing the $CO_2$ gas when the temperature exceeds 80°C.

This is because if increasing the flow rate of the gas, an exothermic reaction proceeds, while if reducing the flow rate of the gas, the reaction speed becomes slower and the temperature drops.

From the above explanation, when actually treating steelmaking-slag for stabilization in large quantities on site, it is ideal to pile steelmaking-slag adjusted in amount of water added to an optimal range in the range less than the moisture value at which free-water starts to become present and to a range 5 to 8 mass% less than that moisture value, in accordance with the distribution of grain size, at a special location or facility designed to blow gas containing $CO_2$ gas from the bottom or the sides or to place the slag on a mesh-like moving conveyor etc. facilitating transport of slag after stabilization treatment and enabling permeability of air to be secured and, while making the slag gradually move in the facility, measure one or two or more of the amount of addition of moisture to the steelmaking-slag, the flow rate of the gas containing $CO_2$ gas, the ambient temperature of the surroundings of the steelmaking-slag at one or more locations, and the relative humidity of the gas containing $CO_2$ gas, then control the ambient temperature of the surroundings of the steelmaking-slag to at least 10°C below zero and not more than 40°C.

Further, instead of this or in addition to this, it is ideal to supply a flow of gas containing $CO_2$ gas while performing one or two or more of adjusting the amount of addition of moisture to the steelmaking-slag so as to become a range of less than a moisture value at which free-water starts to become present and to a range 5 to 8 mass% less than that moisture value, adjusting the flow rate of the gas containing $CO_2$ gas, and controlling the relative humidity of the gas containing $CO_2$ gas to a range of 75 to 100%.

At this time, if measuring the ambient temperature of the surroundings of the steelmaking-slag periodically from right after the start of the stabilization treatment and controlling the ambient temperature of the surroundings of the steelmaking-slag to become higher, it is possible to control one or both of the flow rate and relative humidity of the gas containing $CO_2$ gas and, in accordance with need, instead of this or along with this, for example spray mist-like moisture on the slag to control the moisture content of the steelmaking-slag or use other means to prevent the grains of the steelmaking-slag from binding with each other and thereby enable stabilization of the steelmaking-slag in a far shorter time than the past.

That is, in the prior art, the slag had been carbonated in the state with free-water present, so the $CaCO_3$ or $CaCO_3$ and $MgCO_3$ produced at the outer periphery of the slag acted as binders to bind the grains of the slag. In the present invention, however, the slag is carbonated in the state with no free-water present, so no $CaCO_3$ or $CaCO_3$ and $MgCO_3$ serving as a binder can be produced at the outer periphery of the slag. Therefore, it is possible to prevent the slag grains from binding with each other as above.

In this way, the aspect of the invention stated in claim 1 is characterized by controlling one or two or more of the amount of moisture added to the steelmaking-slag, the flow rate of the gas containing $CO_2$ gas, and the relative humidity of the gas so as to prevent the steelmaking-slag grains from binding with each other in the treatment.

Grains of steelmaking-slag stabilized by carbonation in this way were buried in a resin which was then polished and observed in cross-section. Slag including free-CaO or $Ca(OH)_2$ inside in a state of relatively porosity had almost the entire amount stabilized by the calcium carbonate. Further, it could be confirmed that even grains having a low porosity, dense, and considered to be almost all free-CaO reacted with the 0.5 to 2 mm or so layer of calcium carbonate from the outer periphery to the inside.

This is truly the result of the carbonation reaction proceeding through the water permeating to the inside. If the free-CaO or $Ca(OH)_2$ changes to calcium carbonate before this state, the total of the free-CaO and $Ca(OH)_2$ after stabilization treatment will become 0.9 mass% or less.

With this slag, even if placing a considerable amount in water or seawater, it was confirmed that the rise in pH or the turbidity could be sufficiently suppressed (aspect of invention stated in claim 1).

Further, the steelmaking-slag treated for stabilization according to the present invention comprises quasi-granular bodies where the component slag grains are not binded with other, but are simply aggregated and fall apart by a slight external force of an extent of a touch of the finger, so may be used for the aggregate of slag having a distribution of grain size of a maximum grain size of 25 mm or less able to be used for example for road construction (Grain-Size Adjusted Steelmaking-slag MS-25 for Top Road Construction Material, Crusher Run Steelmaking-slag CS-20 for Bottom Road Construction Material, etc. defined in JIS A5015:Steelmaking-slag for Roads) (aspects of invention stated in claims 3 and 4).

Further, an example of measurement of the distribution of grain size of 1 mm or less (cumulative weight rate) for steelmaking-slag grains treated for stabilization according to the method of the present invention and for steelmaking-slag grains before stabilization treatment is shown in FIG. 6. From FIG. 6, it is learned that the ratio of slag of a grain size of 200 $\mu$m or less falls.

To clarify the reasons, the inventors examined the slag grains in detail. As a result, the inventors learned that compared with before stabilization treatment, powder of a maximum grain size of 75 $\mu$m or less was deposited on slag grains of a grain size of more than 75 $\mu$m to an extent not separating from them in the grading process using a sieve.

Fine powder of a maximum grain size of 75 $\mu$m or less is harmful in that it generally leads to an increase in the unit amount of water of concrete or an increase in the shrinkage at the time of drying if the amount exceeds a certain limit when used as aggregate etc. for various civil engineering uses.

From this, for example, "JIS A5308:Ready Mix Concrete" etc. prescribe the amount of the same, but according to the stabilization treatment of the present invention, it is possible to ease the effects of the fine powder.

Further, in the stabilization treatment according to the present invention, there are the secondary advantages of suppression of dust in the step of transporting the stabilized slag after stabilization treatment and the little amount of fine powder suspended for a long time even when placed in water as an alternative to natural sand for example, so the relatively quick recovery from turbidity, etc. (aspect of invention stated in claim 4).

According to the present invention, it is possible to treat for stabilization steelmaking-slag, for which utilization had been difficult in the past due to the reaction with water or seawater and consequent rise of the pH or turbidity, in a far shorter time than the past, at ordinary temperature, inexpensively, and in large amounts.

As the gas containing $CO_2$ gas used for the stabilization treatment, $CO_2$ gas in gas exhausted from a plant may be used, so there is also the secondary effect in terms of the global environment of enabling suppression of the emission of the $CO_2$ in that gas into the atmosphere.

The steelmaking-slag treated for stabilization, like conventional slag treated for carbonation, is free of the expansion, disintegration, and powderization arising due to the free-CaO and free-MgO, does not cause the problem of a rise of the pH of water such as underground water or the pH of seawater due to the dissolution of free-CaO or $Ca(OH)_2$, and can be utilized as an alternative material for various aggregates, road construction materials, and natural sand.

[2] Next, the invention for stabilizing steelmaking-slag and using it as a water environment protection material will be explained.

The aspects of the invention of claim 6
are water environment protection materials characterized by comprising in part or whole a steelmaking-slag treated for carbonation and not formed on its surface with a film comprising a carbonate.

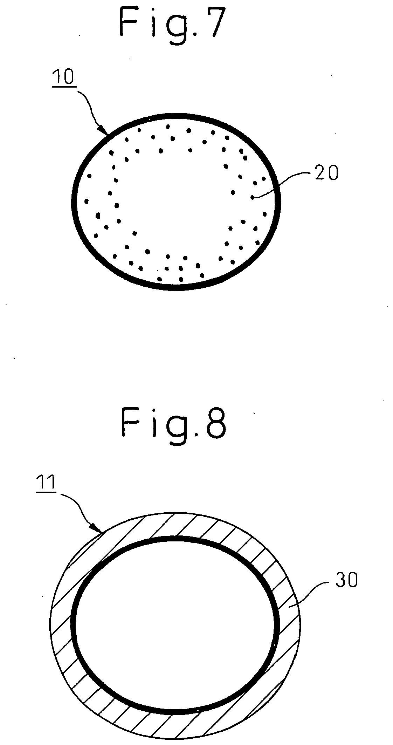

First, the water environment protection material of the present invention will be explained using the drawings. FIG. 7 and FIG. 8 are views of cross-sections of carbonated steelmaking-slag. FIG. 7 is a view of the cross-section of the steelmaking-slag 10 used in the present invention, while FIG. 8 is a view of the cross-section of conventional steelmaking-slag 11.

Steelmaking-slag 11 treated for carbonation by the conventional method is covered with a hardened film 30 formed due to the soluble ingredients precipitating on the slag surface changing to hard carbonates. The dissolution of soluble ingredients from inside the slag to outside the slag is therefore suppressed.

For example, $Ca(OH)_2$ and other soluble ingredients change to hard $CaCO_3$.

However, the hardened film 30 made of $CaCO_3$ or another carbonate formed on the surface of the slag causes the permeability of water through the slag to drop and ends up inhibiting the dissolution of minerals contained in the slag to the outside of the slag.

Further, slag has the functions of immobilizing the hydrogen sulfide and phosphorus present in a water area by the ingredients in the slag, but if there is no permeability of the water through the slag, these functions are also not expressed.

In this way, the steelmaking-slag having the structure shown in FIG. 8 can prevent the rise in pH and the turbidity of the surrounding water arising due to the slag, but these features of slag are not being made sufficient use of.

Note that "covered by hardened film" includes not only the surface of the slag being completely covered, but also the presence of parts where the film is partially not formed, but the permeability of the water through the slag dropping nevertheless.

In the steelmaking-slag 10 used in the present invention, the soluble ingredients present inside the slag are carbonated, but no film made of carbonate is formed on the surface. The carbonated soluble ingredients 20 are present free inside the steelmaking-slag.

The degree of dispersion of the carbonated soluble ingredients 20 is determined by the grain size of the steelmaking-slag, the porosity, and the method of treatment for carbonation.

If a steelmaking-slag with a high porosity, the soluble ingredients of the slag as a whole are carbonated, and a steelmaking-slag having carbonated soluble ingredients 20 dispersed throughout the slag as a whole is produced.

Conversely, if a steelmaking-slag with a low porosity, the soluble ingredients at the locations near the outer periphery of the slag are carbonated, and a steelmaking-slag having carbonated soluble ingredients 20 dispersed in a range of a certain distance from the outer periphery is produced.

Even a steelmaking-slag having soluble ingredients 20 dispersed only near the outer periphery exhibits a sufficient effect in preventing the rise in pH and occurrence of turbidity in the surrounding water area.

The water environment protection material including the steelmaking-slag of the aspect shown in FIG. 7 is treated for carbonation, so the rise in pH and turbidity of the surrounding water due to the dissolution of alkali ingredients from the slag are suppressed.

The features inherent to slag such as the dissolution of minerals from the slag and the chemical immobilization of compounds into the slag can also be made use of.

Note that the carbonated soluble ingredients are $CaCO_3$, $MgCO_3$, and other carbonates.

The water environment protection material of the present invention can be used in various types of water areas, but the effects of the present invention differ somewhat depending on the water area. Note that a "water environment protection material" means a material contributing to the protection of a water environment and that "water environment protection" is a broad concept meaning having a good influence on the water environment.

The term "water environment protection" for example includes improvement of the water environment, maintenance of the water environment, prevention of deterioration of the water environment, and other concepts. Anything manifesting one or more effects among these corresponds to water environment protection.

Further, "water area" is a concept meaning a location related to water regardless of being seawater or fresh water. For example, the ocean, rivers, lakes and marshes, tidal flats, etc. may be mentioned as examples of water areas. However, the present invention is not limited to just these water areas.

Below, specific applications of the water environment protection material of the present invention and its effects will be explained.

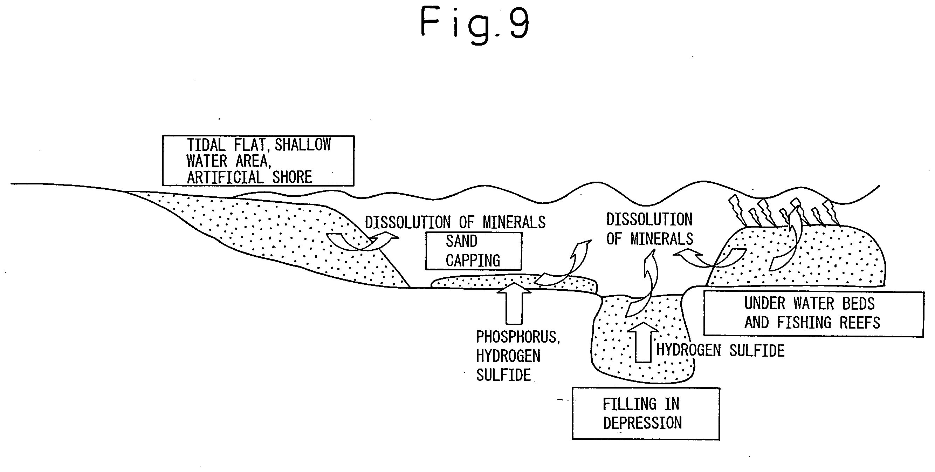

However, the technical scope of the present invention is not limited to the specific applications listed below. Note that for reference, the concept of the specific applications of the water environment protection material is shown in FIG. 9.

FIG. 9 is a diagram of the state of placement of water environment protection material for sand capping, filling bottom depressions in the water, at artificial shores, tidal flats, shallow water areas, underwater plant beds, and fishing reefs. In FIG. 9, the dotted locations are areas where the water environment protection material is placed.

The water environment protection material disclosed in the present application may be used as a sand capping material. A "sand capping material" is a material dropped on top of eutrophied bottom mud and physically sealing in the bottom mud.

Steelmaking-slag has a larger specific gravity than the sand generally used as a sand capping material, so will not be washed away by the tide and will remain stably at the bottom.

Further, the hydrogen sulfide or phosphorus produced at the eutrophied bottom mud can be chemically immobilized by the steelmaking-slag.

Further, there is also the effect of inhibiting the sulfate reduction of sulfides by sulfate-reducing bacteria (see FY1978 Report on Tests for Development of Technology for Dealing With Red Tide - Tests for Improvement of Bottom Materials by Lime", March 1979, Hamajima Marine Laboratory in Mie Prefecture). Due to these effects, occurrence of red tide and occurrence of blue tide are suppressed.

The chemical immobilization of hydrogen sulfide and phosphorus is effective in the case of use of steelmaking-slag. Therefore, when using a water environment protection material as a sand capping material, it is preferable to use steelmaking-slag.

As the mechanism for chemical immobilization of hydrogen sulfide, the following mechanism is proposed (see FY1995-1996 Report on Survey and Research of Technology for Using Steelmaking-Slag as Sand Capping Material, March 1997, Coastal Development Institute of Technology, Nippon Iron and Stee-Slag Association).

$$Fe^{2+}+HS^-\rightarrow FeS \cdot nH_2O+H^+$$

As the mechanism for chemical immobilization of phosphorus, the following mechanism is proposed (ibid):

$$5Ca^{2+}+OH^-+3PO_4^{3-}\rightarrow Ca_5\,(OH)\,(PO_4)_3\downarrow$$

Note that in the following explanation, the mechanism for chemical immobilization of hydrogen sulfide and the mechanism for chemical immobilization of phosphorus are as explained for sand capping, so a detailed explanation will be omitted in the following explanation.

The water environment protection material disclosed in the present application may also be used as a material for filling bottom depressions in water. A "material for filling bottom depressions in water" is a material used for filling in depressions formed at the bottom due to dredging etc. such as shown in FIG. 9.

By physically filling in such depressions, the production of hydrogen sulfide from the depressions is prevented.

Further, when using the water environment protection material disclosed in the present application to fill in such depressions, it is possible to inhibit the sulfate reduction of sulfides by sulfate reducing bacteria and chemically immobilize hydrogen sulfide.

The water environment protection material disclosed in the present application may also be used as an artificial shore material. An "artificial shore material" means a material used when artificially restoring sand to a shore from which sand has been stripped due to waves.

The objectives of artificial shores may be roughly divided into two objectives:
The first is to restore sand to a shore from which sand has been stripped to regenerate the function of a sandy beach of "breaking waves" or its function as a habitat for animal and plant life. The other is to newly create places for ocean recreation or enjoying the water such as sea bathing.

The water environment protection material disclosed in the present application can be used for any of these objectives, but if considering the characteristic of the present invention of ease of dissolution of minerals such as $SiO_2$, $P_2O_5$, and Fe from the steelmaking-slag, it is particularly effective in imparting the function of creating a habitat for animal and plant life.

The water environment protection material disclosed in the present application is rich in dissolution of minerals from the steelmaking-slag, so the bioproductivity inside and around the water environment protection material increases and the water is cleaned by the life. In turn, the increase in life of the shore as a whole is realized through the food chain.

The water environment protection material disclosed in the present application may also be used as tidal flat material. A "tidal flat material" means a material used for formation of a water area which is covered with water at high tide, but which changes form at low tide.

The water environment protection material disclosed in the present application is rich in dissolution of minerals from the steelmaking-slag, so the bioproductivity inside and around the water environment protection material increases and the water is cleaned by the life. In turn, the increase in life of the tidal flat as a whole is realized through the food chain.

The water environment protection material disclosed in the present application may also be used as a shallow water area material. A "shallow water area" usually means a shallow part of the sea with a depth of within 5 m. A "shallow water area material" means a material used for forming a shallow water area.

The water environment protection material disclosed in the present application is rich in dissolution of minerals from the steelmaking-slag, so the bioproductivity inside and around the water environment protection material increases and the water is cleaned by the life.

The water environment protection material disclosed in the present application may also be used as a underwater plant bed material for creating an undersea forest or repairing rocky shore denudation. A "underwater plant bed" means a location where large water plants grow in clusters on the bottom. A "underwater plant bed material" means a material used for creating such a underwater plant bed.

As a underwater plant bed, an eelgrass bed, *eisenia* and/or *ecklonia* bed, and *sargassum* bed may be mentioned. An eelgrass bed is a underwater plant bed made up of eelgrass, *zostera japonica,* etc.

An *eisenia* and/or *ecklonia* bed is a underwater plant bed made up of *eisenia and/or ecklonia, laminaria,* etc. A *sargassum* bed is an underwater plant bed made up of *sargassum macrocarpum, sargassum ringgoldianum,* and other *Fucales.*

The water environment protection material disclosed in the present application is rich in dissolution of minerals from the steelmaking-slag, so the bioproductivity inside and around the water environment protection material increases and the water is cleaned by the life. Due to such a chain, an undersea forest rich in bio resources is created.

The water environment protection material disclosed in the present application is also used as a fishing reef material. A "fishing reef" means a water area where fishing is conducted. A "fishing reef material" means a material used for forming a place for fish to lay eggs and live.

The water environment protection material disclosed in the present application increases the bioproductivity inside and around the water environment protection material and forms a rich fishing reef since there is rich dissolution of minerals from the steelmaking-slag.

Next, the types of the steelmaking-slag of the present invention will be explained in detail.

As the steelmaking-slag, converter-slag, pretreatment-slag, decarburized-slag, dephosphorized-slag, desulfurized-slag, desilicized-slag, electric furnace reducing-slag, electric arc furnace oxidizing-slag, secondary refinement-slag, casting-pit slag, etc. may be mentioned. It is also possible to use two or more types of these as the steelmaking-slag.

In addition, as the slag able to be used in the present invention, blast furnace slag (blast furnace air-cooled slag and blast furnace granulated slag) may be mentioned.

The steelmaking-slag used in the present invention is not formed on its surface with a film comprising $CaCO_3$, $MgCO_3$, or other carbonate. Here, "not formed with a film comprising carbonate" means that no carbonate film preventing dissolution of minerals present inside is formed.

The mode in which no carbonate film at all is formed is of course included, but the mode where a slight amount of carbonate precipitates on the surface, but does not have any substantial effect on dissolution of minerals also corresponds to the "not formed with a film" in the present invention.

The method of production of steelmaking-slag used in the present invention is not particularly limited, but preferably the method of production based on the later explained discoveries is employed.

The steelmaking-slag used in the present invention is not formed on its surface with a film comprising a carbonate, but inside, carbonation of the soluble calcium ingredient or magnesium ingredient proceeds, so carbonates such as $CaCO_3$ or $MgCO_3$ exist free inside the slag.

By causing the carbonation to proceed inside without allowing carbonate to precipitate at the slag surface, the permeability of water through the slag is secured.

The extent of carbonation in steelmaking-slag, from the viewpoint of preventing damage due to dissolution of calcium, is one of a total content of free-CaO and $Ca(OH)_2$ contained in the steelmaking-slag of not more than 0.9 mass%.

Note that the "free-CaO and $Ca(OH)_2$" spoken of here means CaO and $Ca(OH)_2$ present dispersed inside steelmaking-slag. The content of the free-CaO and $Ca(OH)_2$ is measured using a measuring means such as the ethyleneglycol method or the tribromophenol method.

The grain size of the steelmaking-slag may be determined in accordance with the application and the speed of the tide in the water area in which the slag is placed. In general, the grain size of steelmaking-slag is about 100 µm to 300 mm. When placed in a water area with a fast tide, slag with a large grain size should be used so that the steelmaking-slag is not washed away by the tide.

Conversely, when placed in a water area with a slow tide, it is also possible to use slag with a small grain size. The effect of the present invention is large when using slag with a large surface area per unit weight and small grain size.

The water environment protection material of the present invention includes at least the above-mentioned steelmaking-slag, but in some cases it may also include materials other than steelmaking-slag. As materials other than steelmaking-slag, fly ash and bottom ash and other carbonaceous ash, crushed waste concrete, waste bricks, and waste refractories, municipal garbage slag, dredged sand, and dredged soil may be mentioned.

Two or more of these may also be jointly used. It is also possible to use other materials.

The ratio of mixture when mixing steelmaking-slag and other ingredients is preferably at least 50 mass% of content of the steelmaking-slag so that the effects derived from the steelmaking-slag such as the dissolution of minerals from the slag, the immobilization of hydrogen sulfide, the immobilization of phosphorus, etc. can be secured to a certain extent.

Next, the method of production of steelmaking-slag used in the present invention will be explained. The steelmaking-slag used for the water environment protection material is produced by carbonation of steelmaking-slag. The treatment of steelmaking-slag for carbonation is also called stabilization treatment.

By treating the steelmaking-slag for carbonation, it is possible to prevent the dissolution of alkali ingredients when placing the steelmaking-slag in a water area.

When stabilizing the steelmaking-slag, first, the raw material steelmaking-slag is prepared. The steelmaking-slag may be treated for aging in advance. Carbonated-water or water is added to the steelmaking-slag in accordance with the distribution of grain size. For smooth carbonation, it is preferable to add carbonated-water.

The inventors compared the behavior of carbonation for the case of adding carbonated-water and the case of adding ordinary water. They learned that in the case of ordinary water, the carbonation was slow from when the flow of gas containing $CO_2$ gas started to be supplied to when a certain extent of the $CO_2$ gas dissolved in the water, but after a little while, the carbonation began to proceed, while in the case of use of carbonated-water, simultaneously with the supply of the flow of gas containing $CO_2$ gas, the carbonation proceeded smoothly and the reaction efficiency was good.

Here, as the carbonated-water added to the steelmaking-slag, at the laboratory level, the inventors used commercially available carbonated-water (soda water, 20°C, amount of $CO_2$ gas dissolved at 1 atmosphere about 3 g/liter-$H_2O$), but for actual use on site, carbonated-water produced by various types of carbonated-water production systems or in some cases water in which $CO_2$ is dissolved obtained by blowing various types of exhaust gas discharged from plants into ordinary water to make the $CO_2$ ingredients in the exhaust gas dissolve in the same may also be used.

In the present application, as the carbonated-water, it is preferable to use water containing carbonated-water of at least 0.5 time the saturation solubility of $CO_2$ gas at 1 atmosphere at the temperature of the carbonated-water. This is because if the amount of dissolution of the $CO_2$ gas is lower than that, the effect of sufficiently shortening the time of the carbonation reaction is difficult to obtain. However, for a more efficient carbonation reaction, it is preferable that the amount of dissolution of the $CO_2$ gas in the carbonated-water be large (high supersaturation).

Gas containing $CO_2$ gas is supplied around the steelmaking-slag, whereby the carbonation of the steelmaking-slag proceeds. When treating steelmaking-slag for stabilization on an industrial scale, for example, the steelmaking-slag is supplied to an apparatus designed to blow in gas containing $CO_2$ gas from the bottom or the sides.

When continuously treating steelmaking-slag for stabilization, it is sufficient to place the slag on a mesh-like moving conveyor etc. enabling air permeability to be secured and move it gradually in the facility.

When producing steelmaking-slag used in the present invention, the control of the amount of moisture added is important.

Specifically, preferably, the amount of moisture added is adjusted to a range of less than the moisture value at which free-water starts to become present and at least a value 10 mass% smaller than that moisture value, more preferably a range of 2 to 9 mass% less than the moisture value at which free-water starts to become present, still more preferably a range of 5 to 8 mass% less than the moisture value at which free-water starts to become present.

The inventors investigated the relationship between the amount of addition of moisture and the carbonation rate, whereupon they learned that if not adding any moisture, almost no change occurs, while if adding moisture, the carbonation starts smoothly right after the flow of gas starts to be supplied.

Further, while the speed of carbonation increases along with an increase in the amount of moisture added, it was confirmed that if the amount of moisture added exceeds a certain value, the speed of carbonation drops.

That is, the fact that there is a certain optimal amount for the amount of moisture added became clear.

According to research of the inventors, this phenomenon is believed to be related to the free-water held by the slag. If adding water to a powder, the powder will absorb the water for a little while. In powder engineering, water in this state is called "bound-water".

When the amount of water added is above a certain level, the powder can no longer absorb all of the water and the water becomes present around the powder. The water in this state is called "free-water".

If this free-water is present, the powder has a paste-like fluidity. When slag was measured, it became clear that if a certain amount of moisture added is exceeded, the slag agglomerate exhibits fluidity, that is, above a certain amount of moisture added, free-water becomes present.

If such free-water is present, it is believed that the gas containing $CO_2$ gas has difficulty penetrating inside the slag and that the speed of carbonation would slow.

Japanese Unexamined Patent Publication (Kokai) No. 11-21153 and Japanese Unexamined Patent Publication (Kokai) No. 11-71160 also describe the importance of moisture and the optimum amounts of moisture, but specifically describe to make the grains of the slag bind together to form strong clumps by adding different amounts of moisture over the water absorption rate (water absorption rate of fine aggregate or coarse aggregate defined by JIS A1109 or A1110).

With this, free-water is clearly present and the efficiency of the carbonation treatment drops. The moisture value at which free-water starts to become present in slag differs depending on the grain size of the slag, but in actual systems, the grain size of the slag is not uniform. Slag of various grain sizes less than about 40 mm aggregates. The distribution of grain size also differs depending on the refining process and cooling process and on the process by which slag is generated such as the process for treating and removing metal.

The moisture values at which free (carbonated)-water starts to become present will be explained in detail in accordance with the distribution of grain size of the slag.

If powder or fine granulated slag is prevalent, the value can be found by the method of measurement of the "flow value" (see JIS R2521:Physical Test Methods of Aluminous Cement for Refractories or JIS R5201:Physical Test Methods of Cement), while if coarse granulated slag of a size of as much as 40 mm or so is contained, the value can be found by the method of measurement of the "slump value" (see JIS A1101:Method of Test for Slump of Concrete).

By supplying gas containing $CO_2$ gas to steelmaking-slag in which a predetermined amount of moisture has been added, the carbonation will proceed. As a gas containing $CO_2$ gas, on a laboratory basis, it is possible to use commercially available $CO_2$ gas or $CO_2$ gas into which air, commercially available nitrogen gas, or commercially available argon gas has been mixed.

Industrially speaking, it is efficient to use exhaust-gas from the various plants in a steelmaking-complex. As typical exhaust-gases, exhaust-gas of kiln plants burning lime (concentration of $CO_2$ of about 20 vol%), exhaust-gas of heating furnaces (concentration of $CO_2$ or about 7 vol%), exhaust-gas of power generating plants (concentration of $CO_2$ of about 15 vol%), etc. may be mentioned.

If the concentration of the $CO_2$ gas in the gas containing $CO_2$ gas is low, only naturally the speed of carbonation will fall, but it was able to be confirmed from experiments that the lower the concentration of $CO_2$, the higher the efficiency of use for carbonation. It is believed that aside from the longer time for the carbonation treatment, there is no special effect due to this.

The relative humidity of the gas containing $CO_2$ gas is controlled to the range of 75 to 100%. From the viewpoint of continuously supplying moisture from the gas containing $CO_2$ gas to the slag, the relative humidity of the gas supplied is preferably at least 75%.

More preferably, based on drying theory, it is at least 90% from the viewpoint of supply of moisture to partially dried slag.

The relative humidity can be easily adjusted by blowing gas containing $CO_2$ gas into a multistage water tank etc. to cause saturation of water vapor or mixing it with mist-like water vapor in a special vessel.

The ambient temperature of the surroundings of the steelmaking-slag is made at least 10°C below zero and not more than 40°C. Further, the ambient temperature of the surroundings of the steelmaking-slag is controlled by adjusting the flow rate of the gas containing $CO_2$ gas. The ambient temperature of the surroundings of the steelmaking-slag can be measured by a thermocouple or a commercially available temperature sensor etc.

When the temperature of the surroundings of the steelmaking-slag becomes less than ordinary temperature, it is preferable to increase the flow rate of the gas containing the $CO_2$ gas, while when the temperature exceeds 80°C, it is preferable to decrease the flow rate of the gas containing the $CO_2$ gas. If increasing the gas flow rate, an exothermic reaction proceeds, while if reducing the gas flow rate, the reaction speed becomes slower and the temperature drops.

The inventors investigated the relationship between the temperature and gas flow rate of the surroundings of the steelmaking-slag and the carbonation rate, whereupon the inventors learned that when not supplying a flow of gas (when allowing the slag to stand in an atmosphere of a gas containing $CO_2$ gas), the carbonation becomes extremely slow and that by supplying a flow of gas, the carbonation proceeds and the carbonation rate increases along with the increase in the flow rate.

Further, they learned that when the gas flow rate becomes more than a certain flow rate, the carbonation rate falls. That is, the inventors found that there is a certain optimal rate of the gas flow rate.

To clarify the causes for this, the inventors investigated the carbonation behavior when the gas flow rate is large, whereupon they learned that the speed of carbonation at the beginning of the start of carbonation is slower the larger the gas flow rate, but the carbonation gradually slows down. Further, the inventors learned that the larger the gas flow rate, the higher the ambient temperature of the surroundings of the slag. '

Regarding the temperature at the time of slag treatment, Japanese Unexamined Patent Publication (Kokai) No. 8-259282 describes that if the ambient temperature falls to 80°C or less, carbonation has difficulty proceeding.

Further, Japanese Unexamined Patent Publication (Kokai) No. 11-21153 and Japanese Unexamined Patent Publication (Kokai) No. 11-71160 describe that if the gas is higher in temperature than ordinary temperature, the reactivity is enhanced by that amount, so this is advantageous.

However, the inventors discovered that even if just simply raising the temperature, the speed of the carbonation conversely falls.

As the cause for this, first the following two factors may be considered. First, the carbonation reaction is an exothermic reaction as explained above, so a lower temperature is considered advantageous from the thermodynamic viewpoint. Second, the effect on the amount of dissolution of $CO_2$ gas in the carbonated-water included in the slag may be considered.

The solubility of the $CO_2$ gas (ions) in water also in practice is larger at a low temperature and decreases exponentially along with the rise in temperature, so the speed of dissolution of the carbonate ions in water, which falls along with the reaction, is believed to be faster at a low temperature.

Further, as another factor, drying of the slag by the flow of gas itself has also been a concern. To verify this, the inventors tried supplying a flow of water vapor saturated nitrogen gas instead of gas containing $CO_2$ gas under the same conditions. As a result, again, a drop in the weight of the slag was observed when the gas flow rate was large and it was learned that the gas itself stripped the slag of the carbonated-water.

That is, if supplying a flow of gas containing $CO_2$ gas in a large quantity, heat is generated due to the carbonation occurring at the start of the reaction and simultaneously the drying of the slag by the flow of gas itself proceeds so the carbonated-water ends up being stripped from the slag and the carbonation reaction ends up stopping.

If based on drying theory, there is the discovery that if a gas flow rate around the powder of at least 20 cm/sec is secured, stable drying is possible. Therefore, the gas flow rate around the slag grains is preferably controlled to not more than 20 cm/sec or, from the viewpoint of the supply of the carbonated moisture from the gas, not more than 10 cm/sec.

However, in practice, due to the pressure loss accompanying the packed state of the slag or the irregularity of the flow of gas, control of the gas flow rate is extremely difficult.

Therefore, it is practical to measure the temperature of the surroundings of the slag during the stabilization treatment and control the flow rate of the gas so that the temperature becomes at least 10°C below zero and, from the viewpoint of the solubility of the $CO_2$ gas in the carbonated-water, not more than 40°C.

In the process of production, it is preferable to measure the ambient temperature and other conditions of the surroundings including the steelmaking-slag periodically and control them to the optimal conditions.

For example, if the ambient temperature of the surroundings including the steelmaking-slag becomes high, one or both of the gas flow rate and relative humidity of the gas containing the $CO_2$ gas is controlled or carbonated-water or moisture is sprayed on the slag to control the carbonated-water content of the steelmaking-slag.

By control through this means so that the grains of the steelmaking-slag do not bind with each other, it is possible to stabilize steelmaking-slag in a short time.

Grains of steelmaking-slag treated for carbonation in accordance with the above explanation were buried in a resin which was then polished and observed in cross-section. Slag with a relatively high porosity including free-CaO or $Ca(OH)_2$ had almost the entire soluble calcium ingredient stabilized by the calcium carbonate.

Even in slag with a relatively low porosity, in the about 0.5 to 2 mm layer region from the outer periphery to the inside, the soluble calcium ingredient reacted with the calcium carbonate. This result shows that the carbonation reaction proceeded through the carbonated-water penetrating to the inside.

If the free-CaO or $Ca(OH)_2$ changes to calcium carbonate before this state, the total of the free-CaO and $Ca(OH)_2$ after the stabilization treatment will become not more than 0.9 mass%. With such steelmaking-slag, even if placing a considerable amount in water or seawater, no rise in pH or turbidity will easily occur.

Further, the steelmaking-slag produced by the above method of production includes a small content of slag of fine grain sizes. If the amount of slag with fine grain sizes is small, the production of dust during transport is suppressed. Further, turbidity at the time of charging into the water quickly dissipates.

The aspect of the invention of claim 7 relates to a method of protecting the water environment using the water environmental protection material of the aspects of the invention stated in claim 6. To protect the water environment using a water environmental protection material, as shown in FIG. 9, it is sufficient to place the water environmental protection material in a water area in which protection of the water environment is required.

As the water area, eutrophied bottom mud, bottom depressions in the water, artificial shores, tidal flats, shallow water areas, underwater plant beds, and fishing reefs may be mentioned. Note that "placement in these water areas" means that these water areas need not actually exist at the point of time of placement of the water environmental protection materials. The present invention enables the water environment to be improved and a rich natural environment to be created.

That is, when newly producing tidal flats or underwater plant beds, the areas are still not tidal flats or underwater plant beds at the time of placement of the water environmental protection materials. However, when placing water environmental protection materials with the intent of forming tidal flats or underwater plant beds, those water areas corresponds to the tidal flats or underwater plant beds.

The effect in the case of applying the water environmental protection material to a water area is as explained above, so here the explanation will be omitted. Further, the water environmental protection material used also is as explained relating to the first aspect of the present invention, so the explanation here will be omitted.

The steelmaking-slag used for the water environmental protection material of the present invention is not formed on its surface with a film comprising a carbonate, so the minerals can dissolve from the inside of the slag to the outside of the slag and the ability to immobilize hydrosulfides or phosphorus is high. Therefore, the water environment is effectively protected.

Examples

(Example I)

This is an example of using of water as an additive solution in the stabilization treatment of steelmaking-slag.

50 tons of steelmaking-slag of the composition shown in Table 1, including 3.5 mass% of hydrated lime (f-CaO, that is, free-CaO and $Ca(OH)_2$ in total) was aged under atmospheric pressure in a 100°C water vapor atmosphere for 36 hours.

The grain size of the steelmaking-slag after aging treatment was not more than 25 mm. The amount of hydrated lime was analyzed by chemical analysis (ethyleneglycol extraction - atomic absorption photometry).

The steelmaking-slag after this aging treatment was divided into smaller amounts of about 2 tons each. The amount of water added was adjusted to the conditions shown in Table 2. The amount of water added was found by finding the moisture value giving free-water of 0 mass% and using this to find the level of Table 2 by the slab test method of "JIS:A1101 Concrete".

Slag adjusted in amount of water added was arranged in a space of a width of 1 m and a depth of 1 m at the bottom of which a mesh-like iron sheet was placed. Sensors were set inside to enable the temperature and humidity at about 10 locations to be measured. The slag was piled up to a height of 1 m, then covered by a sheet.

Gas containing $CO_2$ gas adjusted in relative humidity was similarly made to flow from the bottom through the thus prepared steelmaking-slag under the conditions shown in Table 2.

In Examples 1 and 2 (Reference), the stabilization treatment was performed by just the supply of a flow of gas containing a predetermined amount of $CO_2$ gas without controlling the ambient temperature around the steelmaking-slag, but in Examples 3 to 8, the stabilization treatment was performed while controlling at least one of the flow rate of the gas containing the $CO_2$ gas, the relative humidity of the gas, and the content of moisture of the slag so that the ambient temperature around the steelmaking-slag becomes strongly fixed at a set temperature.

The test results are shown in Table 3.

In Examples 1 and 2 (Reference) and 3 to 8 of the present invention, the steelmaking-slag did not bind after carbonation treatment, the stabilization treatment was completed within 10 hours with the original grain size of the steelmaking-slag, and stabilized steelmaking-slag comprising quasi-granular bodies breaking apart if touched by the hand, for which compressive strength cannot be measured, could be obtained.

In each case, the total of the free-CaO and $Ca(OH)_2$ could be made not more than 0.9 mass%.

In particular, by using a gas containing $CO_2$ gas with a relative humidity of 100% (water vapor saturation) as in Examples 3 to 8 or by controlling the ambient temperature of the steelmaking-slag to not more than 40°C, the total of the free-CaO and $Ca(OH)_2$ could be reduced to not more than 0.7 mass%.

On the other hand, in Comparative Example 1 outside the range of the present invention, the amount of carbonated-water added to the steelmaking-slag is too small, so the carbonation does not proceed that much. Even after 10 hours of carbonation treatment, the total of the free-CaO and $Ca(OH)_2$ was a high 2.2 mass%.

In Comparative Example 2, where the amount of addition of carbon added to the steelmaking-slag was too great, the carbonation treatment time required was a long time of 36 hours. After the stabilization treatment, the slag solidified hard. As a result, the compressive strength was 20 MPa. Therefore, only a material requiring a crushing step for use as a road construction material requiring a wide distribution of grain size or as a substitute for natural sand could be obtained.

**EP 1 630 143 B1**

Table 1

| | | | | | | | | (mass%) |
|------|-----------|------|--------|------|------|-----------|-----------|-------|
| FeO | $Fe_2O_3$ | CaO | $SiO_2$ | MnO | MgO | $Al_2O_3$ | $P_2O_5$ | f-CaO |
| 20.7 | 4.5 | 43.2 | 16.7 | 3.5 | 3.2 | 2.2 | 2.5 | 3.5 |

17

Table 2

| | Grain size of slag before carbonation treatment (mm) | Amount of water added (mass%) | Added moisture-free-water (mass%) | Conditions of gas containing $CO_2$ gas | | | Ambient temp. around slag (°C) | Carbonation treatment time (hr) |
|---|---|---|---|---|---|---|---|---|
| | | | | Gas flow rate (Nm$^3$/ hr) | Partial pressure of $CO_2$ gas | Relative humidity (%) | | |
| (Reference) Ex. 1 | ≤5 | 10 | -8 | 6 | 1.0 | 75 | 20 to 80 | 9 |
| (Reference) Ex. 2 | ≤5 | 10 | -8 | 6 | 1.0 | 100 | 20 to 80 | 8 |
| Ex. 3 | ≤5 | 10 | -8 | ≤6 | 1.0 | 100 | 20 to 40 | 7 |
| Ex. 4 | ≤2 | 15 | -8 | ≤6 | 1.0 | 80 to 100 | 20 to 40 | 10 |
| Ex. 5 | ≤10 | 7 | -8 | ≤6 | 1.0 | 80 to 100 | 20 to 40 | 6 |
| Ex. 6 | ≤25 | 5 | -8 | ≤6 | 1.0 | 80 to 100 | 20 to 40 | 6 |
| Ex. 7 | ≤5 | 10 | -8 | ≤10 | 0.2 | 80 to 100 | 20 to 40 | 10 |
| Ex. 8 | ≤5 | 8 to 10 | -6 to -8 | ≤6 | 1.0 | 100 | 20 to 40 | 6 |
| Comp. Ex. 1 | ≤5 | 5 | -13 | 6 | 1.0 | 100 | 20 to 80 | 10 |
| Comp. Ex. 2 | ≤5 | 20 | 2 | 8 | 1.0 | 100 | 20 to 80 | 36 |

EP 1 630 143 B1

Table 3

| | Grain size of slag after carbonation treatment*1 (mm) | Size of slag clumps after carbonation treatment (mm) | Compressive strength of slag after carbonation treatment (MPa) | f-CaO in slag after carbonation treatment*2 (mass%) |
|---|---|---|---|---|
| (Reference) Ex. 1 | ≤5 | 50 to 100 | Not measurable | 0.9 |
| (Reference) Ex. 2 | ≤5 | 50 to 100 | Not measurable | 0.8 |
| Ex. 3 | ≤5 | 50 to 100 | Not measurable | 0.5 |
| Ex. 4 | ≤2 | 50 to 100 | Not measurable | 0.7 |
| Ex. 5 | ≤10 | 50 to 100 | Not measurable | 0.5 |
| Ex. 6 | ≤25 | 50 to 100 | Not measurable | 0.6 |
| Ex. 7 | ≤5 | 50 to 100 | Not measurable | 0.7 |
| Ex. 8 | ≤5 | 50 to 100 | Not measurable | 0.4 |
| Comp. Ex. 1 | ≤5 | 20 to 180 | Not measurable | 2.2 |
| Comp. Ex. 2 | ≤5 | 1 m square block | 20 | 1.0 |
| *1: Size of individual grains of slag forming stabilized steelmaking-slag clumps (pseudo-granular bodies) *2: Hydrated lime f-CaO (total of free-CaO and $Ca(OH)_2$) | | | | |

(Example II)

This is an example of using of carbonated-water as an additive solution in the treatment of steelmaking-slag for stabilization.

50 tons of steelmaking-slag of the composition shown in Table 4, including 3.5 mass% of hydrated lime (f-CaO, that is, free-CaO and $Ca(OH)_2$ in total) was aged under atmospheric pressure in a 100°C water vapor atmosphere for 36 hours.

The grain size of the steelmaking-slag after aging treatment was not more than 25 mm. The amount of hydrated lime was analyzed by chemical analysis (ethyleneglycol extraction - atomic absorption photometry).

The steelmaking-slag after this aging treatment was divided into smaller amounts of about 2 tons each. The amount of carbonated-water added was adjusted to the conditions shown in Table 5. As the carbonated-water, water containing about 1.5 times the $CO_2$ gas with respect to a saturated solubility of $CO_2$ gas of 1.75 g/1-$H_2O$ at 20°C under 1 atmosphere was used. The amount of carbonated-water added was found by finding the moisture value giving free-water of 0 mass% and using this to find the level of Table 5 by the slab test method of "JIS A1101:Concrete".

Slag adjusted in amount of water added was arranged in a space of a width of 1 m and a depth of 1 m at the bottom of which a mesh-like iron sheet was placed. Sensors were set inside to enable the temperature and humidity at about 10 locations to be measured. The slag was piled up to a height of 1 m, then covered by a sheet.

Gas containing $CO_2$ gas adjusted in relative humidity was similarly made to flow from the bottom through the thus prepared steelmaking-slag under the conditions shown in Table 5.

In Examples 1 and 2 (Reference), the stabilization treatment was performed by just the flow of gas containing a predetermined amount of $CO_2$ gas without controlling the ambient temperature around the steelmaking-slag, but in Examples 3 to 8, the stabilization treatment was performed while controlling at least one of the flow rate of the gas containing the $CO_2$ gas, the relative humidity of the gas, and the content of moisture of the slag so that the ambient temperature around the steelmaking-slag becomes strongly fixed at a set temperature.

The test results are shown in Table 6.

In Examples 1 and 2 (Reference), and 3 to 8 of the present invention, the steelmaking-slag did not bind after carbonation treatment, the stabilization treatment was completed within 9 hours with the original grain size of the steelmaking-slag, and stabilized steelmaking-slag comprising quasi-granular bodies breaking apart if touched by the hand, for which compressive strength cannot be measured, could be obtained.

In each case, the total of the free-CaO and $Ca(OH)_2$ could be made not more than 0.9 mass%.

In particular, by using a gas containing $CO_2$ gas with a relative humidity of 100% (water vapor saturation) as in Examples 3 to 8 or by controlling the ambient temperature of the steelmaking-slag to not more than 40°C, the total of the free-CaO and Ca(OH)$_2$ could be reduced to not more than 0.6 mass%.

On the other hand, in Comparative Example 1 outside the range of the present invention, the amount of carbonated-water added to the steelmaking-slag is too small, so the carbonation does not proceed that much. Even after 10 hours of carbonation treatment, the total of the free-CaO and Ca(OH)$_2$ was a high 2.2 mass%.

In Comparative Example 2, where the amount of addition of carbon added to the steelmaking-slag was too great, the carbonation treatment time required was a long time of 36 hours. After the stabilization treatment, the slag solidified hard. As a result, the compressive strength was 20 MPa. Therefore, only a material requiring a crushing step for use as a road construction material requiring a wide distribution of grain size or as a substitute for natural sand could be obtained.

Table 4

| | | | | | | | | (mass%) |
| --- | --- | --- | --- | --- | --- | --- | --- | --- |
| FeO | Fe$_2$O$_3$ | CaO | SiO$_2$ | MnO | MgO | Al$_2$O$_3$ | P$_2$O$_5$ | f-CaO |
| 20.7 | 4.5 | 43.2 | 16.7 | 3.5 | 3.2 | 2.2 | 2.5 | 3.5 |

Table 5

| | Grain size of slag before carbonation treatment (mm) | Amount of carbonated-water added (mass%) | Added moisture-free-water (mass%) | Conditions of gas containing $CO_2$ gas | | | Ambient temp. around slag (°C) | Carbonation treatment time (hr) |
| | | | | Gas flow rate (Nm³/hr) | Partial pressure of $CO_2$ gas | Relative humidity (%) | | |
|---|---|---|---|---|---|---|---|---|
| (Reference) Ex. 1 | ≤5 | 10 | -8 | 6 | 1.0 | 75 | 20 to 80 | 8 |
| (Reference) Ex. 2 | ≤5 | 10 | -8 | 6 | 1.0 | 100 | 20 to 80 | 7 |
| Ex. 3 | ≤5 | 10 | -8 | ≤6 | 1.0 | 100 | 20 to 40 | 6 |
| Ex. 4 | ≤2 | 15 | -8 | ≤6 | 1.0 | 80 to 100 | 20 to 40 | 9 |
| Ex. 5 | ≤10 | 7 | -8 | ≤4 | 1.0 | 80 to 100 | 20 to 40 | 6 |
| Ex. 6 | ≤25 | 5 | -8 | ≤4 | 1.0 | 80 to 100 | 20 to 40 | 6 |
| Ex. 7 | ≤5 | 10 | -8 | ≤10 | 0.2 | 80 to 100 | 20 to 40 | 9 |
| Ex. 8 | ≤5 | 8 to 10 | -6 to -8 | ≤6 | 1.0 | 100 | 20 to 40 | 6 |
| Comp. Ex. 1 | ≤5 | 5 | -13 | 6 | 1.0 | 100 | 20 to 80 | 10 |
| Comp. Ex. 2 | ≤5 | 20 | 2 | 8 | 1.0 | 100 | 20 to 80 | 36 |

Table 6

| | Grain size of slag after carbonation treatment *1 (mm) | Size of slag clumps after carbonation treatment (mm) | Compressive strength of slag after carbonation treatment (MPa) | f-CaO in slag after carbonation treatment *2 (mass%) |
|---|---|---|---|---|
| (Reference) Ex.1 | ≤5 | 50 to 100 | Not measurable | 0.8 |
| (Reference) Ex. 2 | ≤5 | 50 to 100 | Not measurable | 0.7 |
| Ex. 3 | ≤5 | 50 to 100 | Not measurable | 0.5 |
| Ex. 4 | ≤2 | 50 to 100 | Not measurable | 0.6 |
| Ex. 5 | ≤10 | 50 to 100 | Not measurable | 0.5 |
| Ex. 6 | ≤25 | 50 to 100 | Not measurable | 0.5 |
| Ex. 7 | ≤5 | 50 to 100 | Not measurable | 0.6 |
| Ex. 8 | ≤5 | 50 to 100 | Not measurable | 0.4 |
| Comp. Ex. 1 | ≤5 | 20 to 80 | Not measurable | 2.2 |
| Comp. Ex. 2 | ≤5 | 1 m square block | 20 | 1.0 |

*1: Size of individual grains of slag forming stabilized steelmaking-slag clumps (quasi-granular bodies)
*2: Hydrated lime f-CaO (total of free-CaO and $Ca(OH)_2$)

(Example III)

This is an example relating to a water evironment protection material.

Three types of steelmaking-slag, that is, as an example of the invention, steelmaking-slag brought into contact with $CO_2$ gas and not formed on its surface with a film comprising a carbonate and, as comparative examples, steelmaking-slag brought into contact with $CO_2$ gas and formed on its surface with a film of a carbonate and steelmaking-slag not brought into contact with $CO_2$ gas, were used for experiments for evaluation of growth of life in the case of use for a shallow water area material.

The test method consisted of first laying three types of materials shown in Table 7 to a thickness of 30 cm in a 1 meter square container. Seawater was poured on top of this to a depth of 30 cm. Note that the steelmaking-slag used was steelmaking-slag with a maximum grain size of 5 mm and a central grain size of 1.6 mm.

During the evaluation period, fresh seawater was filled and circulated at 200 cc/sec. Further, 100 seeds of eelgrass were sowed after the elapse of one month from the start of the test.

The results of evaluation of the state of growth of life and the appearance of shallow water area materials six months and 12 months after the start of the test are shown in Table 7.

In this example of the present invention, no turbidity phenomenon or binding at the surface of shallow water area materials occurred, a clear difference was seen in the amount of meiobenthos with the comparative examples, and a higher bioproductivity could be confirmed.

Table 7

| Survey items | Material of example | | Material of comparative example | | | |
|---|---|---|---|---|---|---|
| | Slag without film comprising carbonate formed on surface | | Slag with film of carbonate formed on surface | | Slag not allowed to contact $CO_2$ | |
| | Test period (months) | | | | | |
| | 6 | 12 | 6 | 12 | 6 | 12 |
| Chlorophyll a (μg/cm$^3$) | 13 | 19 | 5 | 7 | 3 | 15 |
| Meiobenthos (ind/20 cm$^2$) | 0 | 4350 | 0 | 800 | 0 | 750 |
| Bacteria (x 10$^9$ cells/g wet) | 0 | | 0 | 3 | 0 | 2 |
| No. of eelgrass shoots | - | 42 | - | 30 | - | 12 |

(continued)

| Survey items | Material of example | | Material of comparative example | | | |
| --- | --- | --- | --- | --- | --- | --- |
| | Slag without film comprising carbonate formed on surface | | Slag with film of carbonate formed on surface | | Slag not allowed to contact $CO_2$ | |
| | Test period (months) | | | | | |
| | 6 | 12 | 6 | 12 | 6 | 12 |
| Turbidity of surface of shallow water area materials | No | No | No | No | Yes | Yes |
| Binding | No | No | No | No | Yes | Yes |

INDUSTRIAL APPLICABILITY

As explained above, according to the present invention, it is possible to stabilize steelmaking-slag under ordinary temperature, in a far shorter time than the past, inexpensively, and in large volume and to provide a steelmaking-slag free from expansion, disintegration, and powderization, free from the problem of a rise in pH, and able to be used as a substitute for various types of aggregates, road construction materials, and natural sand.

Further, according to the present invention, it is possible to use $CO_2$ emitted from factories, so there is the secondary effect on the global environment of enabling the emission of $CO_2$ into the atmosphere to be suppressed.

The water environment protection material of the present invention is used for eutrophied bottom mud, bottom depressions in the water, artificial shores, tidal flats, shallow water areas, underwater plant beds, and fishing reefs. The present invention enables the water environment to be improved and a rich natural environment to be created.

Accordingly, the present invention is technology useful in industry and environmental protection and has great applicability.

**Claims**

1. A method of treatment of steelmaking-slag comprising slag of various grain sizes less than 40 mm for stabilization, the method **characterized by** comprising the steps of adjusting the steelmaking-slag to have an amount of moisture or amount of carbonated-water to a range 5 to 8 mass % less than a moisture value where free-water starts to become present, and then supplying a flow of $CO_2$ gas for carbonation treatment without allowing the grains of the steelmaking-slag to bind together, the moisture value where the free-water starts to become present being measured by JIS A1101,
and making relative humidity of a gas containing said $CO_2$ gas 75 to 100% by controlling one or more of addition of the amount of the moisture, a flow rate of the gas and the relative humidity of the gas and making an ambient temperature in surroundings of the steelmaking-slag when supplying the flow of the gas at least 10°C below zero and not more than 40°C by controlling the flow rate of the gas, and wherein the steelmaking-slag after said carbonation treatment has free-CaO and $Ca(OH)_2$ of a total of not more than 0.9 mass%.

2. A method of treatment of steelmaking-slag for stabilization as set forth in claim 1, **characterized in that** said steelmaking-slag is steelmaking-slag treated to age in an air atmosphere, pressurized atmosphere, or water vapor atmosphere.

3. A stabilized steelmaking-slag obtained by a method according to claim 1 or 2, wherein the steelmaking-slag comprises granular bodies comprising steelmaking-slag grains and having a grain size of not more than 25 mm and free-CaO and $Ca(OH)_2$ of a total of not more than 0.9 mass%.

4. A stabilized steelmaking-slag as set forth in claim 3, **characterized in that** said steelmaking-slag has slag powder of a grain size of not more than 75 $\mu$m deposited on slag grains of a grain size of over 75 $\mu$m.

5. Use of a stabilized steelmaking-slag according to claim 3 or 4 as a road construction material.

6. Use of a stabilized steelmaking-slag according to claim 3 or 4 as a part or a whole of a water environment protection material used as a material for sand capping, a material for filling in bottom depressions in the water, a material for artificial shores, a material for tidal flats, a material for shallow water area, a material for underwater plant beds, and a material for fishing reefs.

7. A water environment protection method **characterized by** placing a water environment protection material as set forth in claim 6 in eutrophied bottom mud, in a bottom depression, at an artificial shore, a tidal flat, a shallow water area, a underwater plant beds, and a fishing reef.

## Patentansprüche

1. Verfahren zum Behandeln von Stahlwerksschlacke, die Schlacke mit verschiedenen Korngrößen von weniger als 40 mm zur Stabilisierung enthält, wobei das Verfahren **gekennzeichnet ist durch** die Schritte zum Einstellen der Stahlwerksschlacke derart, dass sie einen Feuchtigkeitsgrad oder eine Menge an kohlensäurehaltigem Wasser in einem Bereich aufweist, der 5 bis 8 Masse-% niedriger ist als ein Feuchtigkeitswert, bei dem freies Wasser beginnt sich zu bilden, und zum anschließenden Zuführen eines $CO_2$-Gasstroms zur Karbonisierungsbehandlung, ohne dass sich die Körner der Stahlwerksschlacke aneinander binden können, wobei der Feuchtigkeitswert, bei dem das freie Wasser beginnt sich zu bilden, durch JIS A1101 gemessen wird; und
Einstellen einer relativen Feuchtigkeit eines Gases, das das $CO_2$-Gas enthält, auf 75 bis 100% durch Steuern der Erhöhung des Feuchtigkeitsgrades, einer Durchflussrate des Gases und/oder der relativen Feuchtigkeit des Gases und Einstellen einer Umgebungstemperatur in der Umgebung der Stahlwerksschlacke während der Zufuhr des Gasstroms auf mindestens 10°C unter Null und nicht mehr als 40°C durch Steuern der Durchflussrate des Gases, und wobei die Stahlwerksschlacke nach der Karbonisierungsbehandlung freies CaO und $Ca(OH)_2$ in einer Gesamtmenge von nicht mehr als 0,9 Masse-% aufweist.

2. Verfahren zum Behandeln von Stahlwerksschlacke nach Anspruch 1, **dadurch gekennzeichnet, dass** die Stahlwerksschlacke Stahlwerksschlacke ist, die in einer Luftatmosphäre, einer Druckatmosphäre oder einer Wasserdampfatmosphäre zur Alterung behandelt wird.

3. Stabilisierte Stahlwerksschlacke, die durch ein Verfahren nach Anspruch 1 oder 2 erhalten wird, wobei die Stahlwerksschlacke granulatartige Körper aufweist, die Stahlwerksschlackenkörner mit einer Korngröße von nicht mehr als 25 mm und freies CaO und $Ca(OH)_2$ in einer Gesamtmenge von nicht mehr als 0,9 Masse-% aufweisen.

4. Stabilisierte Stahlwerksschlacke nach Anspruch 3, **dadurch gekennzeichnet, dass** die Stahlwerksschlacke Schlackenpulver mit einer Korngröße von nicht mehr als 75 $\mu$m aufweist, das auf Schlackenkörnern mit einer Korngröße von mehr als 75 $\mu$m aufgebracht ist.

5. Verwendung einer stabilisierten Stahlwerksschlacke nach Anspruch 3 oder 4 als ein Straßenbaumaterial.

6. Verwendung einer stabilisierten Stahlwerksschlacke nach Anspruch 3 oder 4 als Teil oder Ganzes eines Gewässerumgebungsschutzmaterials, das als ein Material zum Sandabdecken, ein Material zum Verfüllen von Bodenvertiefungen im Wasser, ein Material für künstliche Ufer, ein Material für Wattflächen, ein Material für Flachwasserflächen, ein Material für Unterwasserpflanzenbeete und ein Material für zur Fischerei genutzte Riffe verwendet wird.

7. Gewässerumgebungsschutzverfahren, **gekennzeichnet durch** Anordnen eines Gewässerumgebungsschutzmaterials nach Anspruch 6 in eutrophiertem Grundschlamm, in einer Bodenvertiefung, an einem künstlichen Ufer, in einem Watt, in einer Flachwasserfläche, in Unterwasserpflanzenbeeten und in einem zur Fischerei genutzten Riff.

## Revendications

1. Procédé de traitement de scorie d'aciérie comprenant une scorie de différentes tailles de grains inférieures à 40 mm pour stabilisation, le procédé **caractérisé en ce qu'**il comprend les étapes d'ajustement de la scorie d'aciérie pour présenter une quantité d'humidité ou quantité d'eau gazéifiée dans un intervalle de 5 à 8 % en masse inférieure à une valeur d'humidité où l'eau libre commence à être présente, et d'introduction subséquente d'un écoulement de gaz de $CO_2$ pour un traitement de carbonatation sans laisser les grains de la scorie d'aciérie se lier ensemble, la valeur d'humidité où l'eau libre commence à être présente étant mesurée par JIS A1101,
et la constitution d'humidité relative d'un gaz contenant ledit gaz de $CO_2$ à de 75 à 100 % en contrôlant un ou plusieurs de l'addition de la quantité de l'humidité, d'un débit du gaz et de l'humidité relative du gaz et la constitution d'une température ambiante dans l'environnement de la scorie d'aciérie lors de l'introduction de l'écoulement du gaz à au moins 10°C sous zéro et au plus 40°C en contrôlant le débit du gaz, et dans lequel la scorie d'aciérie après ledit traitement de carbonatation présente CaO libre et $Ca(OH)_2$ d'un total d'au plus 0,9 % en masse.

2. Procédé de traitement de scorie d'aciérie pour stabilisation selon la revendication 1, **caractérisé en ce que** ladite scorie d'aciérie est une scorie d'aciérie traitée pour vieillir dans une atmosphère d'air, atmosphère pressurisée, ou atmosphère de vapeur d'eau.

3. Scorie d'aciérie stabilisée obtenue par un procédé selon la revendication 1 ou 2, dans laquelle la scorie d'aciérie comprend des corps granulaires comprenant des grains de scorie d'aciérie et présentant une taille de grains d'au plus 25 mm et CaO libre et $Ca(OH)_2$ pour un total d'au plus 0,9 % en masse.

4. Scorie d'aciérie stabilisée selon la revendication 3, **caractérisée en ce que** ladite scorie d'aciérie présente une poudre de scorie d'une taille de grains d'au plus 75 $\mu$m déposée sur des grains de scories d'une taille de grains supérieure à 75 $\mu$m.

5. Utilisation d'une scorie d'aciérie stabilisée selon la revendication 3 ou 4 comme un matériau de construction de route.

6. Utilisation d'une scorie d'aciérie stabilisée selon la revendication 3 ou 4 comme une partie ou une totalité d'un matériau pour la protection d'un environnement d'eau utilisé comme un matériau pour bouchage de sable, un matériau de remplissage dans des dépressions de fonds dans l'eau, un matériau pour des rivages artificiels, un matériau pour des plats à marée, un matériau pour zone d'eau peu profonde, un matériau pour lits de plantes immergées, et un matériau pour récifs de pêche.

7. Procédé pour la protection d'un environnement d'eau caractérisé en plaçant un matériau pour la protection d'un environnement d'eau selon la revendication 6 dans un fond boueux eutrophisé, dans une dépression de fond, sur un rivage artificiel, un plat à marée, une zone d'eau peu profonde, des lits de plantes immergées, et un récif de pêche.

# Fig.1

# Fig.2

# Fig.3

JIS R2521

FREE-WATER PRESENT

FLOW VALUE

AMOUNT OF MOISTURE ADDED(%)

# Fig.4

CARBONATION RATE AFTER ANY TIME (INDEX)

FLOW RATE OF GAS CONTAINING $CO_2$ GAS (INDEX)

# Fig.5

# Fig.6

# Fig.7

# Fig.8

# Fig.9

TIDAL FLAT, SHALLOW
WATER AREA,
ARTIFICIAL SHORE

DISSOLUTION OF MINERALS

DISSOLUTION
OF MINERALS

SAND
CAPPING

PHOSPHORUS,
HYDROGEN
SULFIDE

HYDROGEN SULFIDE

UNDER WATER BEDS
AND FISHING REEFS

FILLING IN
DEPRESSION

EP 1 630 143 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 52129672 A
- JP 8259282 A
- JP 11021153 A

- JP 11071160 A
- JP 2001026470 A
- US 5569314 A
- JP 2000203903 A


**Non-patent literature cited in the description**

- CAMP-ISIJ. The Iron and Steel Institute of Japan, 1999, vol. 12, 828
- **JOHNSON D.C. et al.** Solidification of stainless steel slag by accelerated carbonation. *Environmental Technology,* 01 June 2003, vol. 24 (6), 671-678
- **KONDO R. et al.** New Material Obtained by Carbonation of L.D.Slag. *SEKKO TO SEKKAI-GYPSUM AND LIME,* 01 January 1977, vol. 4 (147

- FY1978 Report on Tests for Development of Technology for Dealing With Red Tide - Tests for Improvement of Bottom Materials by Lime. Hamajima Marine Laboratory in Mie Prefecture, March 1979
- FY1995-1996 Report on Survey and Research of Technology for Using Steelmaking-Slag as Sand Capping Material. Coastal Development Institute of Technology, March 1997